(19)

**Europäisches Patentamt**
**European Patent Office**
**Office européen des brevets**

(11)  **EP 4 484 161 A1**

(12)  # EUROPEAN PATENT APPLICATION

(43) Date of publication:
01.01.2025  Bulletin 2025/01

(21) Application number: 23382664.3

(22) Date of filing: 28.06.2023

(51) International Patent Classification (IPC):
**B32B 27/08** (2006.01)  **B32B 27/32** (2006.01)
**C08J 5/18** (2006.01)  **C08L 23/06** (2006.01)

(52) Cooperative Patent Classification (CPC):
**B32B 27/08; B32B 27/32;** B32B 2250/05;
B32B 2250/242; B32B 2270/00; B32B 2272/00;
B32B 2307/5825; B32B 2307/72; B32B 2307/7376;
B32B 2553/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Dow Global Technologies LLC**
**Midland, MI 48674 (US)**

(72) Inventors:
• **ZARIOUI, Salma el Marrasse**
**43006 Tarragona (ES)**
• **PARKINSON, Shaun**
**43006 Tarragona (ES)**
• **PATEL, Rajen M.**
**Texas 77541 (US)**

(74) Representative: **Elzaburu S.L.P.**
**Edificio Torre de Cristal**
**Paseo de la Castellana 259 C, planta 28**
**28046 Madrid (ES)**

(54) **DEVELOPMENT OF NOVEL FILM STRUCTURES THAT SIGNIFICANTLY INCREASE THE CD TEAR PROPERTIES OF CAST STRETCH FILMS EVEN WHEN INCORPORATING PCR (POST-CONSUMER RECYCLED) RESINS INTO STANDARD MARKET FILM STRUCTURES**

(57)  According to one embodiment of the present disclosure, a multilayer film may comprise a first outer layer, a second outer layer, and a core. The core may comprise a first core layer, a second core layer, and a third core layer. The core may be positioned between the first outer layer and the second outer layer. The first core layer may comprise a first recycled resin. The second core layer may comprise at least one of a polypropylene or an ethylene-propylene copolymer. The multilayer film may comprise at least 20 wt. % of the first recycled resin and the optional second recycled resin, based on the total weight of the multilayer film.

EP 4 484 161 A1

**Description**

**TECHNICAL FIELD**

Embodiments described herein generally relate to multilayer films and, more specifically, to multilayer films including recycled resins.

**BACKGROUND**

Improved sustainability and recyclability is a continual goal for flexible packaging manufacturers. The primary means for achieving increased sustainability is the incorporation of recycled resins, such as post-consumer resins (also referred to as "PCR" or "recycled resins") into flexible films.

However, the incorporation of PCR often results in the worsening of physical properties, such as cross direction tear (also referred to as "CD-tear") resistance. CD-tear resistance is one of the most important performance parameters for stretch films. When wrapping pallets with stretch films, such as when using automatic packaging equipment, tearing can result in lost output due to excessive downtime and operator frustration.

Generally, the quantity of PCR in a film is inversely correlated with the CD tear resistance of the film. It is believed that this inverse correlation between PCR content and CD tear resistance is caused by the inherent variable composition of PCR materials and the elevated level of cross-linked PE gels that are normally present in PCR. These gels are believed to create stress concentrations which can weaken the film. One way to overcome this reduced CD-tear resistance is to increase the thickness of the film, but this will negate at least some of the benefits of using PCR materials, such as $CO_2$ footprint reduction.

**BRIEF SUMMARY**

Accordingly, films, such as cast stretch films, which can incorporate relatively high amounts (such as over 30 wt. %) of PCR while maintaining high performance (CD-tear and elongation) are desired. Embodiments of the present disclosure meet this need by providing multilayer film structures with a second core layer, which comprises at least one of a polypropylene or a polyethylene, in the form of an ethylene-propylene copolymer, positioned between two recycled core layers.

Additionally, improved recyclability is of great importance. To achieve this goal, laminates made with monomaterial polymers are desired. The European Union is even considering rules requiring flexible films to be made from a certain percentage of a single material, such as at least 95 wt. % polyethylene. Accordingly, it is also desired to have stretch films which are made exclusively from a single material (monomaterial) in order to increase recyclability. Embodiments of the present disclosure meet this need by providing films constructed mostly or entirely of ethylene-based polymers which maintain the required CD tear resistance.

According to one embodiment of the present disclosure, a multilayer film may comprise a first outer layer, a second outer layer, and a core. The core may comprise a first core layer and a second core layer. The core may be positioned between the first outer layer and the second outer layer. The first core layer may comprise a first recycled resin. The second core layer may comprise at least one of a polypropylene or an ethylene-propylene copolymer. The multilayer film may comprise at least 20 wt. % of the first recycled resin and the optional second recycled resin, based on the total weight of the multilayer film.

Additional features and advantages will be set forth in the detailed description, which follows, and in part will be readily apparent to those skilled in the art from that description or recognized by practicing the embodiments described herein, including the detailed description which follows and the claims.

It is to be understood that both the foregoing general description and the following detailed description describe various embodiments and are intended to provide an overview or framework for understanding the nature and character of the claimed subject matter.

**BRIEF DESCRIPTION OF THE SEVERAL VIEWS OF THE DRAWING**

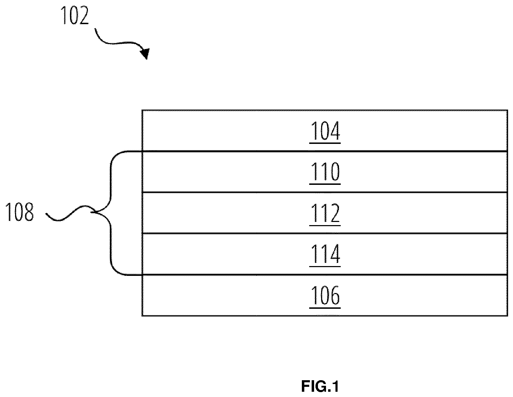

FIG. 1 illustrates a side view of one embodiment of the present multilayer film.

**DETAILED DESCRIPTION**

Specific embodiments of the present application will now be described. The disclosure may, however, be embodied in different forms and should not be construed as limited to the embodiments set forth in this disclosure. Rather, these embodiments are provided so that this disclosure will be thorough and complete, and will fully convey the scope of the subject matter to those skilled in the art.

As discussed above, stretch films which can incorporate relatively high amounts of PCR while maintaining high performance (CD tear and elongation) are desired. Embodiments of the present disclosure meet this need by providing a multilayer film structure which allows for high PCR content and high CD-tear. Some embodiments of the present disclosure also provide enhanced recyclability.

**DEFINITIONS**

"Polymer" refers to a polymeric compound prepared by polymerizing monomers, whether of the same or a different type. The term polymer thus embraces the term homopolymer (employed to refer to polymers prepared from only one type of monomer, with the understanding that trace amounts of impurities can be incorporated into the polymer structure), and the term copolymer or interpolymer. Trace amounts of impurities (for example, catalyst residues) may be incorporated into and/or within the polymer. A polymer may be a single polymer or a polymer blend.

"Multilayer film" refers to any film structure having more than one layer. For example, the multilayer structure may have five or more layers, such as 7, 9, or 11 layers.

"Polyethylene" or "ethylene-based polymer" shall mean polymers comprising greater than 50% by weight of units which have been derived from ethylene monomer. This includes polyethylene homopolymers or copolymers (meaning units derived from two or more comonomers). Common forms of polyethylene known in the art include Low Density Polyethylene (LDPE); Linear Low Density Polyethylene (LLDPE); Ultra Low Density Polyethylene (ULDPE); Very Low Density Polyethylene (VLDPE); single-site catalyzed Linear Low Density Polyethylene, including both linear and substantially linear low-density resins (m-LLDPE); Medium Density Polyethylene (MDPE); and High Density Polyethylene (HDPE).

"Ethylene-propylene copolymer" refers to ethylene-based polymers derived from ethylene and propylene monomers, wherein greater than 50% by weight of units are derived from ethylene monomer.

The term "ULDPE" is defined as an ethylene-based polymer having a density in the range of 0.895 to 0.915 g/cc.

The term "LDPE" may also be referred to as "high pressure ethylene polymer" or "highly branched polyethylene" and is defined to mean that the polymer is partly or entirely homopolymerized or copolymerized in autoclave or tubular reactors at pressures above 14,500 psi (100 MPa) with the use of free-radical initiators, such as peroxides (see for example U.S. Pat. No. 4,599,392, incorporated herein by reference).

The term "LLDPE", includes both resin made using the traditional Ziegler-Natta catalyst systems as well as single-site catalysts such as metallocenes (sometimes referred to as "m-LLDPE"). LLDPEs contain less long chain branching than LDPEs and include the substantially linear ethylene polymers which are further defined in U.S. Pat. No. 5,272,236, U.S. Pat. No. 5,278,272, U.S. Pat. No. 5,582,923 and U.S. Pat. No. 5,733,155; the homogeneously branched linear ethylene polymer compositions such as those in U.S. Pat. No. 3,645,992; the heterogeneously branched ethylene polymers such as those prepared according to the process disclosed in U.S. Pat. No. 4,076,698; and/or blends thereof (such as those disclosed in U.S. Pat. No. 3,914,342 or U.S. Pat. No. 5,854,045). The LLDPE can be made via gas-phase, solution-phase or slurry polymerization or any combination thereof, using any type of reactor or reactor configuration known in the art, including but not limited to gas and solution phase reactors.

The term "$C_6$ LLDPE" refers to ethylene-based polymers produced from ethylene monomer and hexene comonomer. Similarly, "$C_4$ LLDPE" refer to ethylene-based polymers produced from ethylene monomer and butene comonomer, and "$C_8$ LLDPE" refers to ethylene-based polymers produced from ethylene monomer and octene comonomer.

The term "HDPE" refers to polyethylenes having densities greater than about 0.940 g/cc, which are generally prepared with Ziegler-Natta catalysts, chrome catalysts or even metallocene catalysts.

"Polypropylene" or "propylene-based polymers" shall mean polymers comprising greater than 50% by weight of units derived from propylene monomer. This includes polypropylene homopolymers or copolymers (meaning units derived from comonomer, such as ethylene). Common forms of polypropylene known in the art include homopolymer polypropylene (hPP), random copolymer polypropylene (rcPP), impact copolymer polypropylene (hPP + at least one elastomeric impact modifier) (ICPP) or high impact polypropylene (HIPP), high melt strength polypropylene (HMS-PP), isotactic polypropylene (iPP), syndiotactic polypropylene (sPP), and combinations thereof. "Polypropylene" embraces both ordered and random copolymers of propylene. "Polypropylene" embraces plastomers and elastomers comprising at least 50 wt. % of propylene monomers.

"Recycled resins" refers to resins, which were incorporated into products and subsequently re-melted to form a recycled resin. The term "recycled resins" refers to mechanically recycled resins, where the resin is melted and reincorporated into a new product. "Recycled resins" does not include chemically recycled resins, where the polymer is broken down into constituent monomers and incorporated into a new virgin polymer. The term "recycled resins" embraces both pre-consumer recycled polymer and post-consumer resin.

The terms "pre-consumer recycled polymer" and "post-industrial recycled polymer" refer to polymers, including blends of polymers, recovered from pre-consumer material, as defined by ISO-14021. The generic term pre-consumer recycled polymer thus includes blends of polymers recovered from materials diverted from the waste stream during a manufacturing process. The generic term pre-consumer recycled polymer excludes the reutilization of materials, such as rework, regrind, or scrap, generated in a process and capable of being reclaimed within the same process that generated it.

The term "post-consumer resin" (or "PCR"), as used herein, refers to a polymeric material that includes materials previously used in a consumer or industry application i.e., pre-consumer recycled polymer and post-industrial recycled polymer. PCR is typically collected from recycling programs and recycling plants. The PCR may include one or more of an ethylene-based polymer, such as LDPE, LLDPE, polyethylene, a polypropylene, a polyester, a poly(vinyl chloride), a polystyrene, an acrylonitrile butadiene styrene, a polyamide, an ethylene vinyl alcohol, an ethylene vinyl acetate, or a poly-vinyl chloride. The PCR may include one or more contaminants. The contaminants may be the result of the polymeric material's use prior to being repurposed for reuse. For example, contaminants may include paper, ink, food residue, or other recycled materials in addition to the polymer, which may result from the recycling process. PCR is distinct from virgin polymeric material. A virgin polymeric material (such as a virgin polyethylene resin) does not include materials previously used in a consumer or industry application. Virgin polymeric material has not undergone, or otherwise has not been subject to, a heat process or a molding process, after the initial polymer manufacturing process. The physical, chemical, and flow properties of PCR resins differ when compared to virgin polymeric resin, which in turn can present challenges to incorporating PCR into formulations for commercial use.

## EMBODIMENTS

As depicted in FIG. 1, a multilayer film 102 may comprise a first outer layer 104, a second outer layer 106, and a core 108. The core 108 may be positioned between the first outer layer 104 and the second outer layer 106. The core 108 may comprise a first core layer 110 and a second core layer 112. The first core layer 110 may comprise a first recycled resin. The second core layer 112 may comprise at least one of a polypropylene or an ethylene-propylene copolymer. The multilayer film 102 may comprise at least 20 wt. % of the first recycled resin and the second recycled resin, based on the total weight of the multilayer film 102.

<u>The First Outer Layer</u>

The first outer layer 104 may serve as a release layer. A release layer, for example, may have non-cling characteristics or may exhibit lower cling characteristics than a cling layer. The first outer layer 104 may comprise any material suitable for use as a release layer.

The first outer layer 104 may comprise a polyethylene, such as a linear low-density polyethylene (hereinafter "LLDPE"). In embodiments, the first outer layer 104 may comprise at least 50 wt. %, such as at least 60 wt. %, at least 70 wt. %, at least 80 wt. %, at least 90 wt. %, or even at least 99 wt. % of LLDPE.

The first outer layer 104 may have a melt index ($I_2$) of from 0.5 grams per ten minutes (g/10 min.) to 8.0 g/10 min. In embodiments, the first outer layer 104 may have a melt index ($I_2$) of from 0.5 g/10 min to 6 g/10 min, from 0.5 g/10 min to 4 g/10 min, from 0.5 g/10 min to 3 g/10 min, from 2 g/10 min to 7 g/10 min, from 3 g/10 min to 6 g/10 min, or any subset thereof. In embodiments, the multilayer film 102 may be a cast stretch film and the first core layer 110 may have a melt index ($I_2$) of from 2 g/10 min to 6 g/10 min. In embodiments, the multilayer film 102 may be a blown film and the first outer layer 104 may have a melt index ($I_2$) of from 0.5 g/10 min to 3 g/10 min.

The first outer layer 104 may have a density of from 0.916 $g/cm^3$ to 0.935 $g/cm^3$. In embodiments, the first outer layer 104 may have a density of from 0.916 $g/cm^3$ to 0.930 $g/cm^3$, from 0.916 $g/cm^3$ to 0.925 $g/cm^3$, from 0.916 $g/cm^3$ to 0.920 $g/cm^3$, from 0.925 $g/cm^3$ to 0.935 $g/cm^3$, from 0.920 $g/cm^3$ to 0.930 $g/cm^3$, or any subset thereof.

Suitable resins for use in the first outer layer 104 may include ELITE™ 5230 GC, an ethylene-octene copolymer, available from Dow™ Inc., Midland, MI.

<u>The Second Outer Layer</u>

The second outer layer 106 may be a cling layer. Cling layers, for example, may enable the multilayer film 102 to cling to itself when the film is wrapped on a load. The second outer layer 106 may comprise any material suitable for use as a cling layer.

The second outer layer 106 may comprise polyethylene, such as a linear low density polyethylene (LLDPE). In embodiments, the second outer layer 106 may comprise at least 50 wt. %, such as at least 60 wt. %, at least 70 wt. %, at least 80 wt. %, at least 90 wt. %, or even at least 99 wt. % of polyethylene. In embodiments, the polyethylene, such as LLDPE, of the second outer layer 106 may comprise an ethylene-hexene copolymer or an ethylene- butene copolymer.

In embodiments, the second outer layer 106 may be a cast layer or a blown layer, each of which would require differing material properties such as melt index ($I_2$) and density. Additionally, the cast layer or blown layer may be produced by a cling resin approach or an additive approach. Generally, a cling resin approach means that the resin used has inherent cling properties, such as ATTANE™ and AFFINITY™ and COHERE™ available from SABIC Inc. Generally, an additive approach means that a base resin (such as a base LLDPE) is blended with a cling additive, such as ATTANE™ available from DOW Inc., VERSIFY™ available from DOW Inc., VISTAMAXX™ available from DOW Inc., polyisobutylene, or Clearflex CLDO available from Versalis Inc.

The second outer layer 106 may have a melt index ($I_2$) of from 0.5 grams per ten minutes (g/10 min.) to 8.0 g/10 min In embodiments, the second outer layer 106 may have a melt index ($I_2$) of from 0.5 g/10 min to 6 g/10 min, from 0.5 g/10 min to 4 g/10 min, from 0.5 g/10 min to 3 g/10 min, from 2 g/10 min to 7 g/10 min, from 3 g/10 min to 6 g/10 min, or any subset thereof. In embodiments, the multilayer film 102 may be a cast stretch film and the first core layer 110 may have a melt index ($I_2$) of from 2 g/10 min to 6 g/10 min. In embodiments, the multilayer film 102 may be a blown film and the second outer layer 106 may have a melt index ($I_2$) of from 0.5 g/10 min to 3 g/10 min.

The second outer layer 106 may have a density from 0.870 $g/cm^3$ to 0.930 $g/cm^3$. In embodiments, the second outer layer 106 may have a density from 0.870 $g/cm^3$ to 0.820 $g/cm^3$, from 0.870 $g/cm^3$ to $g/cm^3$, from 0.870 $g/cm^3$ to $g/cm^3$, from 0.870 $g/cm^3$ to 0.905 $g/cm^3$, from 0.880 $g/cm^3$ to 0.920 $g/cm^3$, from 0.890 $g/cm^3$ to 0.920 $g/cm^3$, from 0.900 $g/cm^3$ to 0.920 $g/cm^3$, from 0.890 $g/cm^3$ to 0.915 $g/cm^3$, from 0.900 $g/cm^3$ to 0.910 $g/cm^3$, or any subset thereof. In embodiments, the second outer layer may have a density of less than 0.910 $g/cm^3$.

In embodiments, the second outer layer 106 may be a cast layer comprising a cling resin, such as at least 70 wt. %, at least 80 wt. %, at least 90 wt. %, or at least 99 wt. % of the cling resin, based on the total polymer weight of the second outer layer 106. In embodiments, the cast second outer layer 106 comprising the cling resin may have a density of from 0.870 $g/cm^3$ to 0.912 $g/cm^3$ and a melt index ($I_2$) of from 2 g/10 min to 6 g/10 min. In embodiments, the second outer layer 106 may be a cast layer comprising a base resin (such as LLDPE) and a cling additive. The cling additive may be present in an amount from 0 wt. % to 60 wt. %, such as from 1 wt. % to 60 wt. %, from 1 wt. % to 25 wt. %, from 1 wt. % to 15 wt. %, from 1 wt. % to 10 wt. %, or any subset thereof, based on the total polymer weight of the second outer layer 106. In embodiments, the cast second outer layer 106 comprising the cling additive may have a density of from 0.912 $g/cm^3$ to 0.925 $g/cm^3$ and a melt index ($I_2$) of from 2 g/10 min to 6 g/10 min.

In embodiments, the second outer layer 106 may be a blown layer comprising a cling resin, such as at least 70 wt. %, at least 80 wt. %, at least 90 wt. %, or at least 99 wt. % of the cling resin, based on the total polymer weight of the second outer layer 106. In embodiments, the blown second outer layer 106 comprising the cling resin may have a density of from 0.870 $g/cm^3$ to 0.895 $g/cm^3$ and a melt index ($I_2$) of from 0.5 g/10 min to 3.0 g/10 min.

In embodiments, the second outer layer 106 may be a blown layer comprising a base resin (such as LLDPE) and a cling additive. The cling additive may be present in an amount from 0 wt. % to 10 wt. %, based on the total polymer weight of the second outer layer 106. In embodiments, the blown second outer layer 106 comprising the cling additive may have a density of from 0.912 $g/cm^3$ to 0.925 $g/cm^3$ and a melt index ($I_2$) of from 0.5 g/10 min to 3.0 g/10 min.

Suitable resins for use in the second outer layer 106 may include ATTANE™4607GC, an ethylene-hexene copolymer, available from Dow™ Inc., Midland, MI.

In embodiments, the second outer layer may comprise the polyethylene and a cling additive. Suitable cling additives may include polyisobutylene, VERSIFY™ available from Dow™ Inc., Midland, Mi, VISTAMAXX™ available from ExxonMobil, and CLEARFLEX™ CL DO available from Versalis S.p.A.

In some embodiments, as depicted in FIG. 1, the first outer layer 104 and the second outer layer 106 may be the outermost layers of the multilayer film 102.

The First and Third Core Layers

Still referring to FIG. 1, as described above, the multilayer film 102 may comprise a core 108. The core 108 may be disposed between the first outer layer 104 and the second outer layer 106. The core 108 may comprise a first core layer 110 and a second core layer 112. In embodiments, the core 108 may further comprise a third core layer 114. The first core layer 110, the second core layer 112, and, if present, the third core layer 114 may be arranged in any order.

As depicted in FIG. 1, the first core layer 110 may be disposed between the first outer layer 104 and the second core layer 112. The third core layer 114 may be disposed between the second core layer 112 and the second outer layer 106. In some embodiments, the first core layer 110 may be in contact with one or both of the first outer layer 104 and the second core layer 112. In other embodiments, additional layers may be disposed between the first core layer 110 and the first outer layer 104. In some embodiments, there may be no additional layers disposed between the first core layer 110 and the second core layer 112. The first core layer 110 and the second core layer 112 may be in direct contact. In embodiments, the third core layer 114 may be in contact with one or both of the second outer layer 106 and the second core layer 112. In other embodiments, additional layers may be disposed between the first core layer 110 and the first outer layer 104. In some embodiments, no additional layers may be disposed between the third core layer 114 and the second core layer 112. The first core layer 110 and the third core layer 114 may be in direct contact

In various embodiments not depicted in FIG. 1, the first core layer may be disposed between the second core layer and the third core layer. In some embodiments not depicted in FIG. 1, the third core layer may be disposed between the first core layer and the second core layer. In some embodiments not depicted in FIG. 1, the first core layer may be disposed between the third core layer and the second core layer. At least one of the first core layer and the third core layer may be in direct contact with the second core layer.

The first core layer 110 may comprise a first recycled resin. In embodiments, the first core layer 110 may comprise at least 50 wt. %, such as at least 60 wt. %, at least 70 wt. %, at least 80 wt. %, at least 90 wt. %, at least 99 wt. %, from 50 wt. % to 90 wt. %, from 60 wt. % to 80 wt. %, from 65 wt. % to 75 wt. %, or any subset thereof of the first recycled resin, based on the total polymer weight of the first core layer 110. In embodiments, the first core layer 110 may comprise about 70 wt. % of the first recycled resin.

The core 108 may comprise a third core layer 114. The third core layer 114 may comprise a second recycled resin, at least one of a polypropylene or an ethylene-propylene copolymer, or a combination of these.

The third core layer 114 may comprise a second recycled resin. In embodiments, the third core layer 114 may comprise at least 50 wt. %, such as at least 60 wt. %, at least 70 wt. %, at least 80 wt. %, at least 90 wt. %, at least 99 wt. %, from 50 wt. % to 90 wt. %, from 60 wt. % to 80 wt. %, from 65 wt. % to 75 wt. %, or any subset thereof of the second recycled resin, based on the total polymer weight of the third core layer 114. In embodiments, the third core layer 114 may comprise about 70 wt. % of the second recycled resin.

In some embodiments, the first recycled resin and the second recycled resin may be the same material. In other embodiments, the first recycled resin and the second recycled resin may be different materials. In some embodiments, the first recycled resin, the second recycled resin, or both may comprise at least 50 wt. %, such as at least 60 wt. %, at least 70 wt. %, at least 80 wt. %, at least 90 wt. %, or even at least 99 wt. % of post-consumer resins (PCR).

The first recycled resin, the second recycled resin, or both, may independently comprise a linear low-density polyethylene (LLDPE), such as a recycled LLDPE, such as a PCR LLDPE. In embodiments, the first recycled resin, the second recycled resin, or both may comprise at least 50 wt. %, at least 60 wt. %, at least 70 wt. %, at least 80 wt. %, at least 90 wt. %, or even at least 99 wt. % of the recycled LLDPE, such as the PCR LLDPE.

The first core layer 110 may comprise a first blended resin, such as at least 80 wt. %, at least 90 wt. %, at least 99 wt. %, or even at least 99.9 wt. % of the first blended resin, on the basis of the total polymer weight of the first core layer 110. The third core layer 114 may comprise a second blended resin, such as at least 80 wt. %, at least 90 wt. %, at least 99 wt. %, or even at least 99.9 wt. % of the second blended resin, on the basis of the total polymer weight of the third core layer 114. The first blended resin, the second blended resin, or both may comprise a blend of recycled resin (such as PCR) resin and virgin resin. The first blended resin may comprise may comprise at least 50 wt. %, such as at least 60 wt. %, at least 70 wt. %, at least 80 wt. %, at least 90 wt. %, at least 99 wt. %, from 50 wt. % to 100 wt. %, from 60 wt. % to 100 wt. %, from 70 wt. % to 100 wt. %, from 80 wt. % to 100 wt. %, from 90 wt. % to 100 wt. %, from 50 wt. % to 90 wt. %, from 60 wt. % to 80 wt. %, from 65 wt. % to 75 wt. %, or any subset thereof of the first recycled resin, based on the total polymer weight of the first blended resin. The second blended resin may comprise at least 50 wt. %, such as at least 60 wt. %, at least 70 wt. %, at least 80 wt. %, at least 90 wt. %, at least 99 wt. %, from 50 wt. % to 100 wt. %, from 60 wt. % to 100 wt. %, from 70 wt. % to 100 wt. %, from 80 wt. % to 100 wt. %, from 90 wt. % to 100 wt. %, from 50 wt. % to 90 wt. %, from 60 wt. % to 80 wt. %, from 65 wt. % to 75 wt. %, or any subset thereof of the second recycled resin, based on the total polymer weight of the second blended resin.

The first blended resin, the second blended resin, or both may comprise a virgin polymer resin, such as LLDPE resin. In embodiments, the first blended resin, the second blended resin, or both may comprise from 0 wt. % to 50 wt. %, from 1 wt. % to 50 wt. %, from 0 wt. % to 40 wt. %, from 1 wt. % to 40 wt. %, from 0 wt. % to 30 wt. %, from 1 wt. % to 30 wt. %, from 10 wt. % to 50 wt. %, such as from 10 wt. % to 40 wt. %, from 10 wt. % to 30 wt. %, from 20 wt. % to 50 wt. %, from 20 wt. % to 40 wt. %, from 25 wt. % to 35 wt. %, or any subset thereof of the virgin polymer resin, such as virgin LLDPE resin, based on the total polymer weight of the first core layer 110 and the third core layer 114 respectively.

The LLDPE resin (both PCR and, where present, virgin) of the first core layer 110, the third core layer 114, or both may have a density from 0.900 $g/cm^3$ to 0.930 $g/cm^3$. In embodiments, the LLDPE resin of the first core layer 110, the third core layer 114, or both may have a density of from 0.900 $g/cm^3$ to 0.920 $g/cm^3$, from 0.900 $g/cm^3$ to 0.910 $g/cm^3$, from 0.910 $g/cm^3$ to 0.930 $g/cm^3$, from 0.920 $g/cm^3$ to 0.930, from 0.910 $g/cm^3$ to 0.920 $g/cm^3$, or any subset thereof. It should be understood that where virgin LLDPE and PCR LLDPE are both present, the density of the blended resin should be used.

The LLDPE resin (both PCR and, where present, virgin) of the first core layer 110, the third core layer 114, or both may have a melt index ($I_2$) from 1.0 g/ 10 min to 5.0 g/10 min. In embodiments, the LLDPE resin of the first core layer 110, the third core layer 114, or both may have a melt index ($I_2$) from 1.0 g/10 min to 4 g/10 min, from 1.0 g/10 min to 3.0 g/10 min, from 1.0 g/10 min to 2.0 g/10 min, from 2.0 g/10 min to 5.0 g/10 min, from 3.0 g/10 min to 5.0 g/10 min, from 4.0 g/10 min to 5.0 g/10 min, from 2.0 g/10 min to 4.0 g/10 min, or any subset thereof. It should be understood that the LLDPE may be a virgin polymer. It should be understood that where virgin LLDPE and PCR LLDPE are present, the melt index of the blended resin should be used.

Suitable resins for use in each of the first core layer 110 and the third core layer 114 may include REVOLOOP™ LL E, a 70 wt. % recycled LLDPE - 30 wt. % virgin LLDPE blend, available from Dow™ Inc., Midland, MI.

In embodiments, the third core layer 114 may comprise polypropylene and/or an ethylene-propylene copolymer.

In some embodiments, the third core layer 114 may comprise a blend of the second recycled resin and polypropylene and/or an ethylene-propylene copolymer. In some embodiments, the third core layer 114 may comprise at least 50 wt. %, at least 75 wt. %, at least 85 wt. %, at least 90 wt. %, at least 95 wt. %, or at least 99 wt. % of the polypropylene and/or an ethylene-propylene copolymer.

The first core layer 110, the third core layer 114, or both may comprise defects, such as gels. In embodiments, the first core layer 110, the third core layer 114, or both may have a count of defect with an equivalent circular diameter in the range of 200-400 $\mu$m (per 24.6 cm$^3$ of film) greater than 500, or greater than 800, or greater than 1000, or greater than 2000. The first core layer 110, the third core layer 114, or both may have a count of defect with an equivalent circular diameter in the range of 400-800 $\mu$m (per 24.6 cm3 of film) greater than 250, or greater than 400, or greater than 500, or greater than 1000. A typical virgin resin has a defect count of 200-400 $\mu$m (per 24.6 cm$^3$ of film) less than 100 and a defect count of 400-800 $\mu$m (per 24.6 cm$^3$ of film) less than 100. Typically, PCR polyolefins have a higher defect count due to contamination and because the materials have been made into an article, used, and recovered. The processing means that the material has gone through at least two or at least three prior thermal cycles of heating and cooling.

Without being limited by theory, it is believed that recycled resins may result in the formation of polymer gels when they are incorporated into new structures. Polymer gels are defects in the film, and can be formed by a number of different factors, e.g., by phase separation in the reactor, or by extrusion, or from impurities, etc.). However, gels are believed to be more common when using recycled resins. Gels are believed to form stress concentrations and otherwise weak spots when producing a film. Multilayer films according to embodiments of the present disclosure may be more tolerant of the presence of gels than films of other configurations.

The Second Core Layer

Still referring to FIG. 1, as described above, the multilayer film 102 may comprise a second core layer 112. The second core layer 112 may be in contact with at least one of the first core layer 110 and the third core layer 114. In embodiments, the second core layer 112 may be disposed between, and in contact with each of, the first core layer 110 and the third core layer 114.

The second core layer 112 may comprise at least one of a polypropylene or an ethylene-propylene copolymer. In embodiments, the second core layer 112 may comprise at least 50 wt. %, such as at least 60 wt. %, at least 70 wt. %, at least 80 wt. %, at least 90 wt. %, at least 95 wt. %, or even at least 99 wt. % of the at least one of a polypropylene or an ethylene-propylene copolymer.

The polypropylene may comprise polypropylene homopolymer or random copolymer. The polypropylene may have been catalyzed by a Ziegler-Natta catalyst, a single site/metallocene catalyst or a post-metallocene catalyst.

The polypropylene may comprise at least 51 wt. % of the propylene monomer, based on the total polymer weight of the polypropylene. In embodiments, the polypropylene may comprise at least 50 wt. %, at least 60 wt. %, at least 70 wt. %, at least 75 wt. %, at least 80 wt. %, at least 85 wt. %, at least 90 wt. %, at least 95 wt. %, at least 99 wt. %, at least 99.9 wt. %, or even 100 wt. % of the propylene monomer, based on the total polymer weight of the polypropylene. In embodiments, the polypropylene may comprise propylene monomers and ethylene monomers, and the polypropylene may comprise less than 20 wt. % of ethylene monomers, such as less than 16 wt. %, less than 10 wt. %, less than 9 wt. %, less than 6 wt. %, from 1 wt. % to 20 wt. %, from 1 wt. % to 16 wt. %, from 1 wt. % to 10 wt. %, from 1 wt. % to 9 wt. %, from 1 wt. % to 6 wt. %, or any subset thereof of ethylene monomer, based on the total polymer weight of the polypropylene.

The polypropylene may comprise from 84 wt. % to 99.5 wt. %, such as from 85 wt. % to 99.5 wt. %, from 90 wt. % to 99.5 wt. %, from 95 wt. % to 99.5 wt. %, from 97 wt. % to 99.5 wt. %, from 84 wt. % to 99 wt. %, from 84 wt. % to 97 wt. %, from 84 wt. % to 95 wt. %, from 85 wt. % to 90 wt. %, or any subset thereof of propylene and from 0.5 wt. % to 16 wt. %, from 1 wt. % to 16 wt. %, from 3 wt. % to 16 wt. %, from 5 wt. % to 16 wt. %, from 10 wt. % to 16 wt. %, from 0.5 wt. % to 10 wt. %, from 0.5 wt. % to 5 wt. %, from 0.5 wt. % to 3 wt. %, from 0.5 wt. % to 1 wt. %, or any subset thereof of ethylene, based on the total polymer weight of the polypropylene.

The ethylene-propylene copolymer of the second core layer 112 may comprise from 60 wt. % to 95 wt. % of ethylene monomer and 5 wt. % to 40 wt. % of propylene comonomer. In embodiments, the ethylene-propylene copolymer may comprise from 60 wt. % to 90 wt. %, from 60 wt. % to 80 wt. %, from 60 wt. % to 70 wt. %, from 70 wt. % to 95 wt. %, from 80 wt. % to 95 wt. %, from 90 wt. % to 95 wt. %, from 70 wt. % to 80 wt. %, or any subset thereof, of the ethylene monomer and from 5 wt.% to 30 wt. %, from 5 wt. % to 20 wt. %, from 5 wt. % to 10 wt. %, from 10 wt. % to 40 wt. %, from 20 wt. % to 40 wt. %, from 30 wt. % to 40 wt. %, from 10 wt. % to 35 wt. %, from 20 wt. % to 30 wt. %, or any subset thereof of the propylene comonomer.

The ethylene-propylene copolymer may have a density in the range of from 0.865 g/cm$^3$ to 0.925 g/cm$^3$. In embodiments, the ethylene-propylene copolymer may have a density of from 0.875 g/cm$^3$ to 0.925 g/cm$^3$, from 0.885 g/cm$^3$ to 0.925 g/cm$^3$, from 0.900 g/cm$^3$ to 0.925 g/cm$^3$, from 0.910 g/cm$^3$ to 0.925 g/cm$^3$, from 0.865 g/cm$^3$ to 0.910 g/cm$^3$, from 0.865 g/cm$^3$ to 0.895 g/cm$^3$, from 0.865 g/cm$^3$ to 0.880 g/cm$^3$, from 0.880 g/cm$^3$ to 0.910 g/cm$^3$, or any subset thereof.

The ethylene-propylene copolymer may have a melt index ($I_2$) from 0.5 g/10 min to 8.0 g/10 min. In embodiments, the ethylene-propylene copolymer may have a melt index ($I_2$) of from of from 0.5 g/10 min to 6 g/10 min, from 0.5 g/10 min to 4 g/10 min, from 0.5 g/10 min to 3 g/10 min, from 2 g/10 min to 7 g/10 min, from 3 g/10 min to 6 g/10 min, or any subset thereof. In embodiments, the multilayer film 102 may be a cast stretch film and may the ethylene-propylene copolymer may have a melt index ($I_2$) of from 3 g/10 min to 6 g/10 min. In embodiments, the multilayer film 102 may be a blown film and the ethylene-propylene copolymer may have a melt index ($I_2$) of from 0.5 g/10 min to 3 g/10 min.

The ethylene-propylene copolymer may have a molecular weight distribution (MWD) of from 2.0 to 5.0, as measured by conventional gel permeation chromatography (GPC), where MWD is defined as $M_w/M_n$ with $M_w$ being a weight-average molecular weight and $M_n$ being a number-average molecular weight. In embodiments, the ethylene-propylene copolymer may have a MWD from 2.0 to 5.0, from 2.5 to 5.0, from 2.6 to 5.0, from 3.0 to 4.0, from 4.0 to 5.0, from 3.5 to 4.5, or any subset thereof.

In embodiments, the first core layer 110, the second core layer 112, and the third core layer 114 may together comprise at least 80 wt. %, such as at least 90 wt. %, at least 95 wt. %, at least 99 wt. %, or even 100 wt. % of the same material, such as ethylene-based polymers, such as ethylene-propylene copolymers. In embodiments, the multilayer film 102 may comprise at least 80 wt. %, such as at least 90 wt. %, at least 95 wt. %, or even at least 99 wt. % of ethylene-based polymers. It is believed that monocomponent or effectively monocomponent materials are more recyclable.

Overall Film Properties

Still referring to FIG. 1, the multilayer film 102 may have a total thickness of from 6 μm to 70 μm, such as from 10 μm to 70 μm, from 20 μm to 70 μm, from 40 μm to 70 μm, from 50 μm to 70 μm, from 60 μm to 70 μm, from 10 μm to 60 μm, from 10 μm to 60 μm, from 10 μm to 50 μm, from 10 μm to 40 μm, from 10 μm to 30 μm, from 20 μm to 60 μm, from 30 μm to 50 μm, or any subset thereof.

The first outer layer 104 may have a thickness of from 5 % to 20 % of the multilayer film 102, based on a total thickness of the multilayer film 102. In embodiments, the first outer layer 104 may have a thickness of from 5 % to 15 %, from 5 % to 10 %, from 10 % to 20 %, from 15 % to 20 %, from 10% to 15 %, or any subset thereof of the multilayer film 102, based on a total thickness of the multilayer film 102.

The second outer layer 106 may have a thickness of from 5% to 20 % of the multilayer film 102, based on a total thickness of the multilayer film 102. In embodiments, the second outer layer 106 may have a thickness of from 5 % to 15 %, from 5 % to 10 %, from 10 % to 20 %, from 15 % to 20 %, from 10 % to 15 %, or any subset thereof of the multilayer film 102, based on a total thickness of the multilayer film 102.

The core 108 may have a thickness of from 60 % to 90 % of the multilayer film 102 based on a total thickness of the multilayer film 102. In embodiments, the core 108 may have a thickness of from 60 % to 80 %, from 60 % to 70 %, from 70 % to 80 %, from 65 % to 70 %, or any subset thereof of the multilayer film 102 based on a total thickness of the multilayer film 102.

The first core layer 110 and the third core layer 114 may each independently have a thickness of from 20 % to 40 % of the multilayer film 102, based on a total thickness of the multilayer film 102. In embodiments, the first core layer 110 and the third core layer 114 may each independently have a thickness of from 20 % to 35 %, from 20 % to 30 %, from 25 % to 40 %, from 30 % to 40 %, from 25 % to 35 %, or any subset thereof of the multilayer film 102, based on a total thickness of the multilayer film 102.

The multilayer film 102 may comprise at least 20 wt. % of the first recycled resin and the second recycled resin, based on the total weight of the multilayer film 102. In embodiments, the multilayer film 102 may comprise at least 25 wt. %, at least 30 wt. %, at least 35 wt. %, at least 40 wt. %, at least 60 wt. %, at least 80 wt. %, at least 90 wt. %, from 25 wt. % to 95 wt. %, from 25 wt. % to 80 wt. %, from 25 wt. % to 65 wt. %, from 25 wt. % to 50 wt. %, from 30 wt. % to 95 wt. %, from 30 wt. % to 70 wt. %, from 30 wt. % to 50 wt. %, from 40 wt. % to 95 wt. %, from 40 wt. % to 80 wt. %, from 40 wt. % to 65 wt. %, from 40 wt. % to 50 wt. %, or any subset thereof of the first recycled resin and the second recycled resin, based on the total weight of the multilayer film 102.

A thickness of the first core layer 110 may be from 25 % to 175 % of a thickness of the third core layer 114. In embodiments, the thickness of the first core layer 110 may be from 50 % to 150 %, from 75 % to 125 %, from 85 % to 115 %, from 90 % to 110 %, from 95 % to 105 %, from 99 % to 101 %, or any subset thereof of a thickness of the third core layer 114. Without being limited by theory, it has been found that when the first core layer 110 and the third core layer 114 are of approximately the same thickness, the multilayer film 102 shows a drastic improvement in strength.

The second core layer 112 may have a thickness that is less than 70% of the total thickness of the multilayer film 102. In embodiments, the second core layer 112 may have a thickness that is less than or equal to 60 %, less than or equal to 20 %, less than 20 %, less than 15 %, less than 10 %, from 5 % to 20 %, from 5 % to 15 %, from 5 % to 10 %, from 7.5 % to 12.5 %, or any subset thereof, of the total thickness of the multilayer film 102. Without being limited by theory, it has been found that when the second core layer 112 has a thickness of less than 20 %, such as less than 15 %, or less than or equal to 10 % of a thickness of the multilayer film 102, the multilayer film 102 exhibits a significant increase in cross direction tear strength.

The multilayer film 102 may be a monomaterial film. As used herein, a monomaterial film comprises ethylene-based polymers, such as at least 80 wt. %, at least 90 wt. %, at least 95 wt. %, at least 99 wt. %, or even at least 99.9 wt. % of ethylene-based polymers, based on the total polymer weight of the film. It should be understood that the ethylene-based polymers of a monomaterial film may include ethylene-propylene copolymers, LLDPE, ethylene-hexene copolymers, and ethylene-octene copolymers. In embodiments, a monomaterial film may comprise at least 80 wt. %, at least 90 wt. %, or at least 95 wt. % of ethylene monomers, based on the total polymer weight of the multilayer film 102.

The multilayer film 102 may have a cross direction tear resistance (CD-tear) of greater than 30 grams force per $\mu$m of film thickness ($g_f/\mu m$). In embodiments, the multilayer film may have a CD-tear of greater than 40 $g_f/\mu m$, greater than 50 $g_f/\mu m$, greater than 60 $g_f/\mu m$, greater than 70 $g_f/\mu m$, from 30 $g_f/\mu m$ to 100 $g_f/\mu m$, from 40 $g_f/\mu m$ to 100 $g_f/\mu m$, or any subset thereof on the basis of the thickness of the multilayer film 102. The CD-tear may be tested according to ASTM D1922.

The multilayer film 102 may have a cross direction tear resistance (CD-tear) of greater than 300 grams force ($g_f$). In embodiments, the multilayer film may have a CD-tear of greater than 350 $g_f$, greater than 400 $g_f$, greater than 450 $g_f$, greater than 500 $g_f$, greater than 550 $g_f$, greater than 600 $g_f$, greater than 650 $g_f$, from 300 $g_f$ to 1000 $g_f$, from 400 $g_f$ to 1000 $g_f$, from 500 $g_f$ to 1000 $g_f$, from 600 $g_f$, to 1000 $g_f$, or any subset thereof.

The multilayer film 102 may have an elongation at break of at least 200 %. In embodiments, the multilayer film 102 may have an elongation of at least 250 %, at least 300 %, at least 350 %, from 200 % to 400 %, from 200 % to 350 %, from 200 % to 300 %, from 250 % to 400 %, from 300 % to 400 %, or any subset thereof. Elongation at break may be measured according to ASTMD882.

It should be understood that the multilayer film 102 may comprise 5 or more layers. In embodiments, the multilayer film may comprise more than 5 layers, such as 7, 9, or 11 layers.

The multilayer film 102 may be a blown stretch film or a cast stretch film.

The multilayer film 102 may be constructed from two or more film layers by any film lamination and/or coextrusion technique and using any blown or cast film extrusion and lamination equipment known in the art. For example, multilayer film 102 structures may be prepared using coextrusion techniques, such as, by cast coextrusion techniques.

One or more layers of the multilayer film 102 may further comprise one or more additives. Such additives include, but are not limited to, dyes, lubricants, fillers, pigments, antioxidants, processing aids, UV stabilizers, release agents, anti-blocking agents, and combinations thereof. The multilayer film 102 may contain any amounts of such additives, such as from 0 wt. % to 10 wt. % based on a weight of the layer.

## TESTING METHODS

<u>ASTM D1922 MD (Machine Direction) and CD (Cross Direction) Elmendorf Tear Type B</u>

The Elmendorf Tear test determines the average force to propagate tearing through a specified length of plastic film or non-rigid sheeting, after the tear has been started, using an Elmendorf-type tearing tester.

After film production from the sample to be tested, the film was conditioned for at least 40 hours at 23°C (+/- 2 °C) and 50% R.H (+/- 5) as per ASTM standards. Standard testing conditions were 23°C (+/- 2 °C) and 50% R.H (+/- 5) as per ASTM standards.

The force, in grams, required to propagate tearing across a film or sheeting specimen was measured, using a precisely calibrated pendulum device. In the test, acting by gravity, the pendulum swung through an arc, tearing the specimen from a precut slit. The specimen was held on one side by the pendulum, and on the other side by a stationary member. The loss in energy by the pendulum was indicated by a pointer or by an electronic scale. The scale indication was a function of the force required to tear the specimen.

The sample specimen geometry used in the Elmendorf tear test was the 'constant radius geometry,' as specified in ASTM D1922. Testing is typically carried out on specimens that have been cut from both the film MD and CD directions. Prior to testing, the film specimen thickness was measured at the sample center. A total of 15 specimens per film direction were tested, and the average tear strength and average thickness reported. The average tear strength was normalized to the average thickness.

<u>Density</u>

Density is measured in accordance with ASTM D792, and expressed in grams/cm$^3$ (g/cm$^3$).

<u>Elongation at Break</u>

Elongation at break is measured in accordance with ASTMD882.

Melt Index (I$_2$)

Melt Index (I$_2$) is measured in accordance with ASTM D 1238-10 at 190 Celsius and 2.16 kg, Method B, and is expressed in grams eluted/10 minutes (g/10 min).

Gel Permeation Chromatography (GPC)

For gel permeation chromatography (GPC), the chromatographic system consisted of a PolymerChar GPC-IR (Valencia, Spain) high temperature GPC chromatograph equipped with an internal IR5 detector. The auto sampler oven compartment was set at 160º Celsius and the column compartment was set at 150º Celsius. The columns used were 3 Agilent "Mixed B" 30 cm 10-micron linear mixed-bed columns and a 10-$\mu$m pre-column. The chromatographic solvent used was 1,2,4 trichlorobenzene and contained 200 ppm of butylated hydroxytoluene (BHT). The solvent source was nitrogen spared. The injection volume used was 200 microliters and the flow rate was 1.0 milliliters/minute.

Calibration of the GPC column set was performed with 21 narrow molecular weight distribution polystyrene standards with molecular weights ranging from 580 to 8,400,000 g/mol and were arranged in 6 "cocktail" mixtures with at least a decade of separation between individual molecular weights. The standards were purchased from Agilent Technologies. The polystyrene standards were prepared at 0.025 grams in 50 milliliters of solvent for molecular weights equal to or greater than 1,000,000 g/mol, and 0.05 grams in 50 milliliters of solvent for molecular weights less than 1,000,000 g/mol. The polystyrene standards were dissolved at 80 degrees Celsius with gentle agitation for 30 minutes. The polystyrene standard peak molecular weights were converted to polyethylene molecular weights using Equation 1 (as described in Williams and Ward, J. Polym. Sci., Polym. Let., 6, 621 (1968)).:

$$M_{polyethylene} = A \times \left( M_{polystyrene} \right)^B \qquad (EQ1)$$

where M is the molecular weight, A has a value of 0.4315 and B is equal to 1.0.

A fifth order polynomial was used to fit the respective polyethylene-equivalent calibration points. A small adjustment to A (from approximately 0.415 to 0.44) was made to correct for column resolution and band-broadening effects such that NIST standard NBS 1475 is obtained at 52,000 g/mol Mw.

The total plate count of the GPC column set was performed with Eicosane (prepared at 0.04 g in 50 milliliters of trichlorobenzene (TCB) and dissolved for 20 minutes with gentle agitation.) The plate count (Equation 2) and symmetry (Equation 3) was measured on a 200 microliter injection according to the following equations:

$$Plate\ Count = 5.54 * \left( \frac{RV_{Peak\ Max}}{Peak\ Width\ at\ \frac{1}{2}height} \right)^2 \qquad (EQ2)$$

where *RV* is the retention volume in milliliters, the *peak width* is in milliliters, the *peak max* is the maximum height of the peak, and *½ height* is ½ height of the peak maximum.

$$Symmetry = \frac{\left( Rear\ Peak\ RV_{one\ tenth\ height} - RV_{Peak\ max} \right)}{\left( RV_{Peak\ max} - Front\ Peak\ RV_{one\ tenth\ height} \right)} \qquad (EQ3)$$

where *RV* is the retention volume in milliliters and the *peak width* is in milliliters, *peak max* is the maximum position of the peak, *one tenth height* is 1/10 height of the peak maximum, *rear peak* refers to the peak tail at later retention volumes than the peak max, and *front peak* refers to the peak front at earlier retention volumes than the peak max. The plate count for the chromatographic system should be greater than 24,000 and symmetry should be between 0.98 and 1.22.

Samples were prepared in a semi-automatic manner with the PolymerChar "Instrument Control" Software, wherein the samples were weight-targeted at 2 mg/ml, and the solvent (contained 200 ppm BHT) was added to a pre nitrogen-sparged septa-capped vial, via the PolymerChar high temperature auto sampler. The samples were dissolved for 2 hours at 160º Celsius under "low speed" shaking.

The calculations of Mn, Mw, and Mz were based on GPC results using the internal IR5 detector (measurement channel) of the PolymerChar GPC-IR chromatograph according to Equations 4-6, using PolymerChar GPCOne™ software, the baseline-subtracted IR chromatogram at each equally-spaced data collection point (i), and the polyethylene equivalent molecular weight obtained from the narrow standard calibration curve for the point (i) from Equation 1.

$$M_n = \frac{\sum^{i} IR_i}{\sum^{i}\left( IR_i \Big/ M_{polyethylene_i} \right)} \qquad \text{(EQ 4)}$$

$$M_w = \frac{\sum^{i}\left( IR_i * M_{polyethylene_i} \right)}{\sum^{i} IR_i} \qquad \text{(EQ 5)}$$

$$M_z = \frac{\sum^{i}\left( IR_i * M_{polyethylene_i}^{2} \right)}{\sum^{i}\left( IR_i * M_{polyethylene_i} \right)} \qquad \text{(EQ 6)}$$

In order to monitor the deviations over time, a flowrate marker (decane) was introduced into each sample via a micro pump controlled with the PolymerChar GPC-IR system. This flowrate marker was used to linearly correct the flowrate for each sample by alignment of the respective decane peak within the sample to that of the decane peak within the narrow standards calibration. Any changes in the time of the decane marker peak are then assumed to be related to a linear shift in both flowrate and chromatographic slope. To facilitate the highest accuracy of a RV measurement of the flow marker peak, a least-squares fitting routine is used to fit the peak of the flow marker concentration chromatogram to a quadratic equation. The first derivative of the quadratic equation is then used to solve for the true peak position. After calibrating the system based on a flow marker peak, the effective flowrate (as a measurement of the calibration slope) is calculated as Equation 7. Processing of the flow marker peak was done via the PolymerChar GPCOne™ Software.

$$Flowrate_{effective} = Flowrate_{nominal} \times \frac{FlowMarker_{Calibration}}{FlowMarker_{Observed}} \qquad \text{(EQ7)}$$

Defect Count

The Defect Count is a measure of defects that are detected in an extruded film using optical imaging technology according the practices and guidance in ASTM 07310-20 "Standard Practice for Defect Detection and Rating of Plastic Film Using Optical Sensors." The Defect Count is reported as the number of optical defects with an effective circular diameter within defined series of ranges: 200 $\mu$m - 400 $\mu$m, 400 $\mu$m - 800 $\mu$m, 800 $\mu$m - 1600 $\mu$m, 1600 $\mu$m and above. The reported numbers are averaged over 25 parcels where each inspected parcel has a volume of 24.6 cm$^3$; the unit of measure is therefore count of defect per 24.6 cm$^3$ of film. It is measured by an Optical Control Systems Film Surface Analyzer FSA100 (OCS FSA100) optical imaging system. The OCS FSA100 optical imaging system consists of a lighting unit, a CCD line scan camera, and a computer with image/data analysis software version 5.0.4.6.
The OCS FSA100 optical imaging system reports the number of defects in user defined size ranges, where the size is determined as the diameter each of the detected defects. The diameter of a defect is determined as the diameter of a circle having an equivalent area. One analysis cycle (or parcel) inspects 24.6 cm$^3$ of film. The corresponding area is 0.647 m$^2$ for a film thickness of 38 $\mu$m. Film fabrication is accomplished by an OCS ME19 extrusion system equipped with a fixed lip coat hanger die. Die gap is 500 $\mu$m by 15 cm. It is a single screw extruder equipped with a 19 mm screw provided by OCS. The screw design is a 3:1 LID compression ratio. Total extrusion system mass output is 10 $\pm$ 5 kg / hour.
PCR can be analyzed as is or diluted with virgin PE material in dry blend form if the PCR by itself is challenging to process at 100% on the OCS line. The virgin PE material used for dilution should not exceed 50% in mass fraction. If dilution is needed, LDPE with a melt index in the range of 0.2-1 g/10 min (190 °C), and a density in the range of 0.919-0.923 g/cm$^3$. (e.g. DOW™ 132I Low Density Polyethylene Resin, hereafter referred to as LDPE 132I) should be dry blended with the PCR pellets to ensure sufficient processability for film extrusion process on the OCS extruder.

Stretch Film Testing

Stretch technology is characterized by the use of application-specific testing in order to predict performance in the field. The key component of application testing relates to testing the film in a stretched state, which would simulate performance during stretch wrapping. For all of the film tests, samples of 0.6 mil thickness and 20 inch film width are tested. Two types of stretch tests are performed in the stretch lab on the films produced. One involves the use of an ESTL film performance tester that has been developed to offer stretch film testing in representative conditions. The ESTL film performance tester is used to measure ultimate stretch which indicates the maximum level of stretch that could be applied during pallet wrapping. It is also used to perform a tear propagation test to analyze tear performance of the film during stretched conditions.

A second set of tests utilizes a Lantech stretch wrapper which has been outfitted in-house with a 44 in × 35 in × 60 in metal frame to simulate pallet wrapping. Tests performed with this set-up capture the mechanical or abuse properties of the film as well as the films ability to unitize the load, and the cling value of the film.

Ultimate Stretch (US)

Ultimate stretch is measured using an ESTL film performance tester (ESTL, Deerlijk, Belgium) - FPT-750 Film Property Tester. The ultimate stretch test is selected from the test menu and the W-wrap method is then selected. Table A provides the settings for the equipment used in this method. The unwind force, wind force, peel off force, stretch force, peel angle and sound level are measured as a function of the pre-stretch. The pre-stretch is increased until a breaking point. The wind speed during the test is constant at 360 feet/min. The test is repeated 3 times and an average ultimate stretch (US) is reported as a percentage (%) ultimate stretch.

Table A

| Strain Start | % | 200.0 |
|---|---|---|
| Strain Interval | % | 10.0 |
| Line velocity | ft/min | 360 |
| Unwind strain | % | 6.7 |
| Wind strain | % | 4 |

On Pallet Puncture - Type B Load (OPP-B)

If unitized pallet is not uniform in shape with limited irregularities, it's defined as Type "B-Load". This test uses a Bruceton staircase method to determine the maximum force to load at which the film can be passed over a test probe for three overlapping wraps with no failures. The test probe is inserted into the test stand at the desired protrusion distance. All films were tested by 2 inch × 2 inch blunt metal probe extending 6 inches out. The film is positioned such that the test probe is aligned with the center of the film. The film is attached to the test stand and the wrapper started. Once the wrapper reaches 250% pre-stretch, the film is allowed to pass over the probe for a maximum of three wraps. The film is wrapped three times starting with post stretch film tension/ force to load (F2) of 7 lbs. If the film is not punctured by the probe, the test is repeated at an increased F2 force at increments of 0.5 lbs. until failure. Any breakage of the film during any of the wrap is considered a failure at that force to load setting. Once the F2 force reaches a point where failures start to happen the test is repeated for 6 times at one force setting. If the film passes 4 of the 6 tests the film F2 force is increased. If the film fails 4 of the 6 tests then the test is stopped and this is considered the failure point of the film. Depending on the performance of the film at the load setting (i.e., passed or failed), the force to load is increased/decreased and the test is repeated at the new load setting. This test continues until the maximum force at which failure is greater than 50% is found. The highest passing F2 force is reported as On Pallet Puncture (OPP) value. Standard variation for this test is observed to be +/- 1 lb. It should be understood that Type B Load Test is commonly used in pallet packing that a person of ordinary skill in the art would recognize its meaning as used herein. Table C below provides the equipment and settings used in this method.

Table C

| Equipment | Lantech SHC Film Test Wrapper |
|---|---|
| Pre-stretch | 250% |
| Turntable Speed | 10 rpm |

(continued)

| Equipment | Lantech SHC Film Test Wrapper |
|---|---|
| Force to Load (F2) | Variable |
| Probe Type | 2" by 2" blunt rod |
| Probe Protrusion Distance | 6 in |

On Pallet Tear (OPT)

This test uses a Bruceton staircase method to determine the maximum force to load at which the film can be passed over a test probe fixed with a blade to initiate a puncture. The test probe is inserted into the test stand at the desired protrusion distance. The film is positioned such that the test probe is aligned with the center of the film. The film is attached to the test stand and the wrapper started. Once the wrapper reaches 250% pre-stretch, the film is allowed to pass over the probe, for this test a single layer of film is tested. The film tension (F2 force) is increased from an initial low value of ~7 lbs. in increments of 0.5 lbs. until the film tears completely across the cross direction (CD) or transverse direction (TD). An on-pallet tear value is recorded as the highest F2 force that results in the initial puncture not propagating through the entire width of the film causing its failure. Table D provides the equipment and settings used in this method.

Table D

| Equipment | Lantech SHC Film Test Wrapper |
|---|---|
| Pre-stretch | 250% |
| Turntable Speed | 17 rpm |
| Force to Load (F2) | Variable |
| Probe Type | 4" by 4" blunt rod fixed with a razor blade |
| Probe Protrusion Distance | 5 in |

Tear Propagation / Time-to-break (ESTL Tear)

Tear propagation / time-to-break is measured using an ESTL film performance tester (ESTL, Deerlijk, Belgium) - FPT-750 Film Property Tester. 'Tear Propagation' is selected from the test menu and the W-wrap method is then selected. Table E provides the parameters that are selected on the equipment to measure time-to-break (ESTL tear). The sample cast stretch film is brought to a condition of pre-stretch and tension, followed by clamping of the film. A small 'spear shaped knife' is used to make a small vertical cut into the film. Once this cut has been made, the canvas unclamps the film. After one second the wind spindle starts to pull on the film with a constant speed. The other shafts are blocked. This generates a pulling force in the film after the initial cut. The FPT-750 Film Property Tester monitors how long it takes and how much force it takes to break open the full film height. The test is repeated 3 times and an average time-to-break is reported in seconds (s).

Table E

| Strain Start | % | 250.0 |
|---|---|---|
| Line velocity | ft/min | 195 |
| Puncture Probe | | Propagation |
| Unwind tension | lbf | 6.70 |
| Wind strain | % | 10.0 |
| Stretch on loads | % | 285.0 |

EXAMPLES

The following examples are provided to illustrate embodiments described in this disclosure and are not intended to limit the scope of this disclosure or its appended claims.

Specialty Materials

The developmental resins (S-A, S-B, and S-C) were prepared according to the following process and Table 1. All raw materials (monomer and comonomer) and the process solvent (a narrow boiling range high-purity isoparaffinic solvent) were purified with molecular sieves and/or activated alumina adsorbents before introduction into the reaction environment. Hydrogen was supplied pressurized as a high purity grade and was not further purified. The reactor monomer feed stream was pressurized via a mechanical compressor to above reaction pressure. The solvent and comonomer (if present) feed was pressurized via a pump to above reaction pressure. The individual catalyst components were manually batch diluted with purified solvent and pressured to above reaction pressure. All reaction feed flows were measured with mass flow meters and independently controlled with computer automated valve control systems.

The samples were produced in a continuous reaction process consisting of a single reactor. The reactor was a continuous solution polymerization reactor consisting of a liquid full, non-adiabatic, isothermal jacketed, stirred tank reactor (STR). All fresh solvent, monomer, comonomer, hydrogen, and catalyst component feeds were independently controlled. The purified solvent, monomer, comonomer, hydrogen and co-catalyst feeds were mixed, forming the total fresh feed stream. The total fresh feed stream to the reactor (solvent, monomer, comonomer, and hydrogen) was temperature controlled typically between 15-50°C to maintain a single solution phase by passing the feed stream through a heat exchanger. The total fresh feed to the polymerization reactor was injected into the bottom of the reactor. The catalyst component was injected into the polymerization reactor through one injection nozzle The reactor monomer conversion was measured by means of FTnIR and controlled by the catalyst component flow rate to the reactor. The cocatalyst component(s) was/are fed based on calculated specified molar ratios to the primary catalyst component. The heat of reaction was partly removed by the tempered oil flow through the reactor jacket. The oil was circulated over the jacket and an external heater/cooler at a constant flow rate. The temperature of the oil was controlled and was responsible for maintaining an isothermal reaction environment at the specified reactor temperature.

The reactor effluent entered a zone where it was deactivated with the addition of and reaction with a suitable reagent (water). At this same reactor exit location other additives are added for polymer stabilization (typical antioxidants suitable for stabilization during extrusion and fabrication like Octadecyl 3,5-Di-Tert-Butyl-4-Hydroxyhydrocinnamate, Tetrakis(Methylene(3,5-Di-Tert-Butyl-4-Hydroxyhydrocinnamate))Methane, and Tris(2,4-Di-Tert-Butyl-Phenyl)).

Following catalyst deactivation and additive addition, the reactor effluent enters a heated devolatization system where the polymer is removed from the non-polymer stream. The isolated polymer melt is pelletized, cooled, and collected. The non-polymer stream is cooled and sent to different waste stream destinations (gas and liquid).

Table 1

| | | S-A | S-B | S-C |
|---|---|---|---|---|
| Reactor Configuration | Type | Single | Single | Single |
| Comonomer type | Type | propylene | propylene | propylene |
| First Reactor Feed Solvent / Ethylene Mass Flow Ratio | g/g | 5.2 | 5.2 | 5.1 |
| First Reactor Feed Comonomer / Ethylene Mass Flow Ratio | g/g | 0.21 | 0.13 | 0.10 |
| First Reactor Feed Hydrogen / Ethylene Mass Flow Ratio | g/g | 3.2E-05 | 5.8E-05 | 6.4E-05 |
| First Reactor Temperature | °C | 140 | 143 | 143 |
| First Reactor Pressure (gauge) | bar | 30.0 | 30.0 | 30.6 |
| First Reactor Ethylene Conversion | % | 88.4 | 90.3 | 90.3 |
| | | Primary catalyst component 1 | Primary catalyst component 1 | Primary catalyst component 1 |
| | | Co-catalyst A | Co-catalyst A | Co-catalyst A |
| | | Co-catalyst B | Co-catalyst B | Co-catalyst B |
| First Reactor Co-Catalyst 1 to Catalyst Molar Ratio (B to Catalyst Metal ratio) B/Ti | mol/mol | 1.2 | 1.2 | 1.2 |
| First Reactor Co-Catalyst 2 to Catalyst Molar Ratio (Al to Catalyst Metal ratio) Al/Ti | mol/mol | 12 | 10.3 | 10.4 |

(continued)

| | | S-A | S-B | S-C |
|---|---|---|---|---|
| First Reactor Residence Time | min | 6.2 | 6.0 | 6.0 |

Multilayer Film Examples

Five layer cast stretch films were fabricated on a 5-layer Egan Davis Standard coextrusion cast film line. The cast line included three 2-1/2" and two 2" 30:1 LID Egan Davis Standard MAC extruders which were air cooled. All extruders had moderate work DSB (Davis Standard Barrier) type screws. A microprocessor monitored and controlled the operations. The extrusion process was monitored by pressure transducers located before and after the breaker plate as well as four heater zones on each barrel, one each at the adapter and the block, and two zones on the die. The microprocessor also tracked the extruder RPM, %FLA, HP, rate, line speed, % draw, primary and secondary chill roll temperatures, gauge deviation, layer ratio, rate/RPM, and melt temperature for each extruder. A summary of the operating parameters are given in Table 2 below.

Table 2

| Cast Film Line Parameters | |
|---|---|
| Melt Temperature | 525 °F |
| Temperature Profile | B1: 300 °F<br>B2: 475 °F<br>B3-B5: 550 °F<br>Screen: 550 °F<br>Adapter: 550 °F<br>Die all zones: 525 °F |
| Line Speed | 600 ft./min |
| Through Put Rate | 300 lb/hr |
| Chill Roll Temperature | 70°F |
| Cast Roll Temperature | 70°F |
| Air Knife | 40% blower output |
| Vacuum Box | Off |
| Die gap | 20-25 mil |

Each of the examples and comparative examples were prepared using the components listed in Table 3. The melt index ($I_2$) of all compounds other than VERSIFY™ and BOREALIS™ were measured at 190 °C. The melt index ($I_2$) of VERSIFY™ and BOREALIS™ were measured at 230 °C

Table 3

| Product | Melt Index ($I_2$) (g/10 min) | Density (g/cm$^3$) | Composition | Supplier |
|---|---|---|---|---|
| ELITE™ 5230GC | 4.0 | 0.916 | Ethylene-Octene | Dow™ Inc. |
| REVOLOOP™ 70LL E | 2.5 | 0.920 | 70 % LLDPE PCR + 30 % Virgin LLDPE | Dow™ Inc. |
| ATTANE™ 4607GC | 4.0 | 0.904 | Ethylene-Hexene | Dow™ Inc. |
| AFFINITY™ PL1850G | 3.0 | 0.902 | Ethylene-Octene | Dow™ Inc. |
| Sample A (S-A) | 3.0 | 0.900 | Ethylene-Propylene | Experimental resin described above |
| Sample B (S-B) | 6.0 | 0.915 | Ethylene-Propylene | Experimental resin described above |

(continued)

| Product | Melt Index ($I_2$) (g/10 min) | Density (g/cm$^3$) | Composition | Supplier |
|---|---|---|---|---|
| Sample C (S-C) | 6.0 | 0.920 | Ethylene-Propylene | Experimental resin described above |
| VERSIFY™ 3000 | 8.0 | 0.893 | Propylene-Ethylene | Dow™ Inc. |
| BOREALIS™ RD234CF | 8.0 | 0.900 | Polypropylene | Borealis AG |
| ATTANE™ 4404G | 4 | 0.904 | Ethylene-Octene | Dow™ Inc. |
| NATURA PCR-AV100 | 1.8 to 2.8 | 0.914 | LLDPE PCR | Avangard Innovative |
| DS6D82 | 7 | | Random Copolymer PP from | Braskem |
| S-1 (70% AV 100 + 30% Elite 5230) | | | 70% AV 100 + 30% ELITE™ 5230GC | Custom Blend |

The components of the produced films are listed in Table 4. For each of the samples listed in Table 4(a), the first outer layer and the second outer layer were each 15 % of the thickness of the multilayer film. The first core layer and the third core layer were each 30 % of the thickness of the multilayer film. The second core layer was 10 % of the thickness of the multilayer film. The layers were arranged, going from one side to the other, first outer layer, first core layer, second core layer, third core layer, and second outer layer. The resulting films had a thickness of 0.023 mm.

Table 4(a)

| | First Outer Layer | First Core Layer | Second Core Layer | Third Core Layer | Second Outer Layer | PCR Content |
|---|---|---|---|---|---|---|
| CE-1 | ELITE™ 5230GC | ELITE™ 5230GC | ELITE™ 5230GC | ELITE™ 5230GC | ATTANE™ 4607GC | 0% |
| CE-2 | ELITE™ 5230GC | ELITE™ 5230GC | Sample A | ELITE™ 5230GC | ATTANE™ 4607GC | 0% |
| CE-3 | ELITE™ 5230GC | REVOLOOP™ | ELITE™ 5230 | REVOLOOP™ | ATTANE™ 4607GC | 42% |
| CE-4 | ELITE™ 5230GC | REVOLOOP™ | AFFINITY™ PL1850G | REVOLOOP™ | ATTANE™ 4607GC | 42% |
| EX-A | ELITE™ 5230GC | REVOLOOP™ | VERSIFY™ 3000 | REVOLOOP™ | ATTANE™ 4607GC | 42% |
| EX-B | ELITE™ 5230GC | REVOLOOP™ | BOREALIS™ PP | REVOLOOP™ | ATTANE™ 4607GC | 42% |
| EX-C | ELITE™ 5230GC | REVOLOOP™ | Sample A | REVOLOOP™ | ATTANE™ 4607GC | 42% |
| EX-D | ELITE™ 5230GC | REVOLOOP™ | Sample B | REVOLOOP™ | ATTANE™ 4607GC | 42% |
| EX-E | ELITE™ 5230GC | REVOLOOP™ | Sample C | REVOLOOP™ | ATTANE™ 4607GC | 42% |

For each of the samples listed in Table 4(b), the first outer layer and the second outer layer were each 10 % of the thickness of the multilayer film. The first core layer and the third core layer were each 10 % of the thickness of the multilayer film. The second core layer was 10 % of the thickness of the multilayer film. The resulting films had a thickness of 0.8 mil (20.32 μm).

Table 4(b)

| | First Outer Layer | First Core Layer | Second Core Layer | Third Core Layer | Second Outer Layer | PCR Content |
|---|---|---|---|---|---|---|
| CE-5 | ELITE™ 5230GC | ELITE™ 5230GC | ELITE™ 5230GC | ELITE™ 5230GC | ATTANE™ 4404G | 0% |
| CE-6 | ELITE™ 5230GC | 50% - S1 + 50 % ELITE™ 5230GC | 50% - S1 + 50% ELITE™ 5230GC | 50% - S1 + 50 % ELITE™ 5230GC | ATTANE™ 4404G | 28 % |
| EX-F | ELITE™ 5230GC | 60 % - S1 + 40 % ELITE™ 5230GC | 60 % - S1 + 40% ELITE™ 5230GC | DS6D82 | ATTANE™ 4404G | 29.4 % |
| EX-G | ELITE™ 5230GC | DS6D82 | 70/30 1361196/ Elite 5230G | DS6D82 | ATTANE™ 4404G | 29.4 % |

The CD-tear resistance of each of the films listed in Tables 3(a) was tested according to ASTM D1922 as described above. Results of this testing are given in Table 5. The results are expressed in grams-force ($g_f$).

Table 5

| CE-1 | CE-2 | CE-3 | CE-4 | EX-A | EX-B | EX-C | EX-D | EX-E |
|---|---|---|---|---|---|---|---|---|
| 457 | 675 | 475 | 393 | 546 | 672 | 735 | 685 | 707 |

As can be seen from Table 4, the comparative examples CE-1, CE-3, and CE-4, which did not utilize an ethylene-propylene copolymer or polypropylene resin as the second core layer exhibited significantly lower CD-tear than the examples and comparative examples which did (CE-2, EX-B, EX-C, EX-D, and EX-E). Further, the examples which utilized both a second core layer comprising ethylene-propylene copolymer or polypropylene resin and the recycled resins (EX-B, EX-C, EX-D, and EX-E) exhibited no strength decrease relative to the example which utilized ethylene-propylene copolymer for the second core layer and virgin resins in the first and third core layers.

Each of the samples listed in Table 4(b) was tested for various mechanical properties. The results of this testing are given in Table 6.

Table 6

| Sample | Ultimate Stretch (ESTL) (%) | ESTL Tear (Drop Time) (seconds) | On Pallet Tear (lbs) | Puncture (B - load) (lbs) |
|---|---|---|---|---|
| CE-5 | 450 | 3.27 | 15.33 | 17.1 |
| CE-6 | 256.7 | 2.25 | 16 | 12 |
| EX-F | 366.7 | 6.61 | 18 (maximum measurable) | 15.1 |
| EX-G | 383.3 | 10.27 | 18 (maximum measurable) | 15.8 |

As can be seen from Table 6, the comparative films which included PCR (CE-6) performed significantly worse than the example films (EX-F and EX-G) on the ETSL, Drop Time, On Pallet Tear, and Puncture tests. The comparative film without PCR performed well on ultimate stretch and puncture but worse on drop time and on pallet tear than the example film. Additionally, the comparative film without PCR lacks the sustainability benefits of the present example films.

While particular embodiments of the present invention have been illustrated and described, it would be obvious to those skilled in the art that various other changes and modifications can be made without departing from the spirit and scope of the invention. It is therefore intended to cover in the appended claims all such changes and modifications that are within the scope of this invention.

**Claims**

1.   A multilayer film comprising:
   a first outer layer, a second outer layer, and a core comprising a first core layer and a second core layer; wherein:

the core is positioned between the first outer layer and the second outer layer;
the first core layer comprises a first recycled resin; and
the second core layer comprises at least one of a polypropylene or an ethylene-propylene copolymer;
wherein the multilayer film comprises at least 20 wt. % of the first recycled resin and the optional second recycled resin, based on the total weight of the multilayer film.

2. The multilayer film of claim 1, wherein the second core layer comprises an ethylene-propylene copolymer.

3. The multilayer film of either of claims 1 or 2, wherein the core further comprises a third core layer and the third core layer comprises a second recycled resin, a polypropylene, an ethylene-propylene copolymer, or a combination of these.

4. The multilayer film of claim 3, wherein:

   the first core layer is positioned between the first outer layer and the second core layer; and
   the third core layer is positioned between the second outer layer and the second core layer.

5. The multilayer film of any preceding claim, wherein the ethylene-propylene copolymer comprises from 60 wt. % to 95 wt. % of ethylene monomer and 5 wt. % to 40 wt. % of propylene comonomer.

6. The multilayer film of any of claim 2 to claim 5, wherein the ethylene-propylene copolymer has a melt index ($I_2$) from 0.5 g/10 min to 8.0 g/10 min.

7. The multilayer film of any of claim 2 to claim 6, wherein the ethylene-propylene copolymer has a molecular weight distribution, Mw/Mn, of from 2.0 to 5.0.

8. The multilayer film of any preceding claim, wherein the second core layer has a thickness that is less than 20 % of the total thickness of the multilayer film.

9. The multilayer film of any preceding claim, wherein the multilayer film is a blown stretch film or a cast stretch film.

10. The multilayer film of any preceding claim, wherein the first outer layer comprises a linear low-density polyethylene and the second outer layer comprises a polyethylene having a density from 0.890 to 0.930 g/cc.

11. The multilayer film of any preceding claim, wherein:
   the second core layer comprises a homopolymer polypropylene or a random copolymer polypropylene comprising from 84 wt. % to 99.5 wt. % of propylene and from 0.5 wt. % to 16 wt. % of ethylene, based on the total polymer weight of the polypropylene.

12. The multilayer film of any preceding claim, wherein the multilayer film comprises at least 35 wt. % of the first recycled resin and the second recycled resin, based on the total weight of the multilayer film.

13. The multilayer film of claim 3, wherein the first core layer, the third core layer, or both comprise linear low-density polyethylene (LLDPE) resin.

14. The multilayer film of any claim 13, wherein the linear low-density polyethylene resin of the first core layer, the third core layer, or both has a density from 0.900 g/cc to 0.930 g/cc, and a melt index ($I_2$) from 1.0 to 5.0 g/10 min.

15. The multilayer film of any preceding claim, wherein the first core layer, the third core layer, or both comprise from 50 to 100 wt. % recycled resin and from 0 to 50 wt. % virgin polymer.

102

| 104 |
|---|
| 110 |
| 112 |
| 114 |
| 106 |

108

**FIG.1**

Europäisches
Patentamt

European
Patent Office

Office européen
des brevets

# EUROPEAN SEARCH REPORT

**Application Number**

EP 23 38 2664

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 838 587 A1 (DUO PLAST AG [DE]) 23 June 2021 (2021-06-23) <br> * paragraph [0014] * <br> * paragraph [0021] - paragraph [0025] * <br> * paragraph [0034] - paragraph [0035] * <br> * paragraph [0047] - paragraph [0049] * <br> * paragraph [0052] - paragraph [0056] * <br> * paragraph [0060] * <br> * paragraph [0082] - paragraph [0083] * <br> * figures 1,2,3A * <br> * claims 1,2 * | 1-15 | INV. <br> B32B27/08 <br> B32B27/32 <br> C08J5/18 <br> C08L23/06 |
| X | EP 4 086 075 A1 (TRIOWORLD APELDOORN B V [NL]) 9 November 2022 (2022-11-09) <br> * paragraph [0008] * <br> * paragraph [0013] * <br> * paragraph [0019] * <br> * paragraph [0023] - paragraph [0029] * <br> * paragraph [0039] - paragraph [0042] * <br> * claims 1,11 * | 1-15 | |
| | | | **TECHNICAL FIELDS SEARCHED (IPC)** <br><br> B32B <br> C08J <br> C08L |

The present search report has been drawn up for all claims

| Place of search | Date of completion of the search | Examiner |
|---|---|---|
| The Hague | 14 November 2023 | Sanchez Perucha, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 38 2664

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2023

| Patent document cited in search report | | Publication date | Patent family member(s) | | Publication date |
|---|---|---|---|---|---|
| EP 3838587 | A1 | 23-06-2021 | NONE | | |
| EP 4086075 | A1 | 09-11-2022 | CA | 3217931 A1 | 10-11-2022 |
| | | | EP | 4086075 A1 | 09-11-2022 |
| | | | WO | 2022233965 A1 | 10-11-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4599392 A
- US 5272236 A
- US 5278272 A
- US 5582923 A
- US 5733155 A
- US 3645992 A
- US 4076698 A
- US 3914342 A
- US 5854045 A

**Non-patent literature cited in the description**

- **WILLIAMS** ; **WARD**. *J. Polym. Sci., Polym. Let.*, 1968, vol. 6, 621